# DEMANDE DE BREVET EUROPEEN

(11) **EP 1 129 619 A1**
(43) Date de publication de la demande: **05.09.2001**
(21) Numéro de dépôt: 01400541.7
(22) Date de dépôt: 01.03.2001
(51) Int. Cl.: A01M 21/04, A01M 15/00

(54) **Désherbeur thermique attelable à un véhicule**

(30) Priorité: 03.03.2000 FR 0002778
(71) Demandeur: Souslikoff et Cie, 33340 Saint Yzans de Médoc (FR)
(72) Inventeur: Souslikoff, Dominique, 33340 Saint Yzans de Medoc (FR)
(74) Mandataire: Dronne, Guy

(57) **Abrégé**

La présente invention concerne un désherbeur thermique attelable à un véhicule comportant des moyens formant châssis solidaires dudit véhicule. Il comprend des moyens (14) formant au moins une chambre de combustion présentant une ouverture en regard du sol, solidaires dudit châssis (12) et dont au moins une partie (14) est mobile transversalement par rapport à la direction d'avancement dudit véhicule (40) de façon que les contours de la surface au sol (S2) balayée longitudinalement en regard de ladite ouverture desdits moyens varient transversalement, par rapport aux contours de la surface au sol (S1) balayée au regard dudit véhicule (40), sous l'action d'une force F exercée par un obstacle (42) sur le bord latéral (24) desdits moyens. Il comprend également une pluralité de moyens formant brûleur solidaires des moyens (14) formant chambre de combustion.

## Description

La présente invention concerne un désherbeur thermique attelable sur un véhicule et notamment sur un véhicule motorisé du type tracteur agricole.

La destruction de la végétation parasite du type graminées ou autres est relativement délicate et ne peut être réalisée de manière uniforme pour tous les types de culture.

Pour certaines cultures, la pulvérisation d'un herbicide sélectif permet de détruire les mauvaises herbes, mais les produits utilisés dans ce cas ne sont pas toujours inoffensifs pour la santé des individus qui l'utilisent ou qui absorbent les aliments contenant le fruit issu de ces cultures.

La culture de la vigne, notamment, mais non exclusivement, requiert certaines précautions quant au traitement à adopter pour le désherbage compte tenu du fait que le raisin, destiné à la consommation, se développe au-dessus du sol et que les produits utilisés pour désherber la vigne sont aptes à se déposer sur son système foliaire.

Pour palier cet inconvénient on a imaginé de détruire les mauvaises herbes au moyen de la chaleur, en appliquant une flamme ou des flammes contre la surface du sol sur lequel l'herbe se développe.

Les désherbeurs thermiques, montés sur un engin motorisé, fonctionnent généralement au gaz, dont la combustion est réalisée au niveau du sol de manière à brûler l'herbe.

Cependant, les flammes ne sont pas toujours bien contrôlées, et elles atteignent par exemple les feuilles de vigne, ce qui a pour effet de détruire une partie de la végétation et de restreindre son développement.

Par ailleurs, lors du passage de l'engin entre les rangs de vigne, l'espace situé sous la vigne n'est généralement pas atteint complètement puisque la présence des ceps et des piquets de vigne rend impossible le déplacement longitudinal d'un outil entre les ceps. Pour remédier à cet inconvénient, on a tendance à diriger la combustion des gaz vers le rang de vigne et on se heurte au problème précédemment évoqué concernant la dégradation de la partie feuillue de la vigne et parfois du cep.

Un objet de la présente invention est de proposer un désherbeur thermique utilisant le gaz comme combustible tout en évitant les inconvénients mentionnés ci-dessus, notamment en ce qui concerne le contrôle de la flamme.

Pour atteindre ce but, conformément à l'invention, le désherbeur thermique attelable sur un véhicule, notamment un véhicule motorisé, comporte des moyens formant châssis solidaires dudit véhicule et se caractérise en ce qu'il comprend :
- des moyens formant au moins une chambre de combustion présentant une ouverture en regard du sol, solidaires dudit châssis et dont au moins une partie est mobile transversalement par rapport à la direction d'avancement dudit véhicule de façon que les contours de la surface au sol balayée longitudinalement en regard de ladite ouverture desdits moyens varient transversalement, par rapport aux contours de la surface au sol balayée au regard dudit véhicule, sous l'action d'une force exercée par un obstacle sur le bord latéral desdits moyens, et,
- une pluralité de moyens formant brûleur, solidaires des moyens formant chambre de combustion, comportant des moyens formant buse dont les axes sont dirigés selon des directions qui coupent la surface au sol correspondant à la projection orthogonale de ladite ouverture par quoi l'énergie thermique produite par lesdits moyens formant brûleur est substantiellement cédée à la surface du sol en regard de ladite ouverture.

On comprend que le désherbeur thermique qui est supporté par un véhicule motorisé est déplacé parallèlement à un alignement d'un type de plantation comportant des pieds espacés de proche en proche. La chambre de combustion qui définit un espace ouvert au regard du sol et dans lequel le gaz combustible réagit avec l'air pour produire une flamme ou des flammes permet de confiner la chaleur au niveau du sol, et ce d'autant plus que les buses projettent le mélange de gaz vers le sol dans une surface correspondant à la projection de la surface de la chambre sur le sol.

Au moins une partie de cette chambre de combustion est mobile en translation, ce qui permet de la présenter au regard de la surface au sol située entre deux pieds consécutifs de ladite plantation tout en la déplaçant parallèlement audit alignement. Au cours du déplacement, lorsque le bord latéral de la partie mobile heurte le pied, elle se rétracte de façon à n'entraver ni l'avancement du véhicule ni le déplacement de la chambre de combustion.

De plus on comprend que les moyens formant brûleur solidaires de la chambre de combustion, et notamment de la partie mobile, sont présentés et déplacés entre les pieds et vont contourner le pied de manière à brûler les mauvaises herbes autour de celui-ci, lorsque la partie mobile se rétracte.

Selon un premier mode de réalisation, lesdits moyens formant chambre de combustion sont constitués d'une première portion fixée audit châssis et d'au moins une seconde portion latérale mobile par rapport à ladite première portion de façon à constituer une chambre de combustion unique.

Bien que la chambre de combustion comporte une partie mobile, la rétraction de cette partie restreint simplement le volume global de la chambre de combustion unique et la surface au sol balayée est réduite d'autant.

Selon ce premier mode de réalisation les moyens formant chambre de combustion sont constitués d'une partie supérieure formant paroi et d'une partie inférieure formant jupe, ladite partie supérieure comportant une première portion fixée audit châssis et au moins une portion latérale mobile par rapport à ladite première portion.

La partie supérieure formant paroi et la partie formant jupe permettent de constituer un écran thermique préservant le feuillage à proximité de la chambre de combustion et permettent également de confiner la chaleur à la surface du sol.

Selon un second mode de réalisation les moyens formant chambre de combustion comportent une pluralité de chambres de combustion indépendantes, montées mobiles sur ledit châssis.

Ainsi, les chambres de combustion indépendantes sont constituées d'une partie supérieure formant paroi et d'une partie inférieure formant jupe, et ladite partie supérieure est montée mobile sur ledit châssis.

Selon ce second mode de réalisation les chambres de combustion indépendantes sont entièrement déplacées sous l'effet de l'avancement du véhicule et du contact de leur bord latéral avec les pieds. Ainsi, la largeur de surface au sol balayée est relativement constante en fonction de la forme de ladite chambre, et contourne le pied.

Selon un mode préféré de mise en oeuvre, les moyens formant brûleur sont constitués d'une rampe de moyens formant buse, par lesquels le mélange air/gaz est projeté et enflammé.

Selon un autre mode préféré de mise en oeuvre, les moyens formant brûleur sont constitués d'un moyen unique formant buse.

Avantageusement, les portions latérales de chambre mobiles comportent une rampe de moyens formant buse solidaire d'une portion du pourtour desdites chambres mobiles. Ainsi, puisque les axes des moyens formant buse sont dirigés selon des directions qui coupent la surface au sol correspondant à la projection orthogonale de l'ouverture sur le sol, la composante horizontale de la projection de gaz enflammé est nulle ou dirigée vers l'intérieur de la chambre, ce qui concentre l'énergie thermique sous la chambre de combustion. Par ailleurs, ladite rampe de moyens formant buse est susceptible d'être fixée parallèlement à ladite portion du pourtour desdites chambres mobiles correspondant audit bord latéral.

Préférentiellement, la première portion de chambre comporte une pluralité de moyens uniques formant buse dont la composante horizontale de leurs axes est susceptible d'être dirigée vers ladite rampe de moyens formant buse de la portion mobile.

Les moyens formant buse de la rampe constituent un flux thermique au moins vertical dans la portion mobile, ce qui fait obstacle aux flux thermiques issus de la pluralité de moyens formant buses susceptibles d'être dirigés vers les portions mobiles.

Cette configuration limite les pertes thermiques en dehors de la chambre de combustion et diminue le risque de brûler la végétation environnante.

De manière avantageuse, la première portion de chambre comporte en outre une rampe de moyens formant buse pour suppléer les moyens uniques formant buse.

Toutefois, ladite première portion de chambre est susceptible de comporter uniquement des rampes de moyens formant buse.

Selon un mode particulier de réalisation les chambres de combustion indépendantes comportent une rampe de moyens formant buse solidaire d'une portion du pourtour desdites chambres de combustion indépendantes. Grâce à la disposition des moyens formant buse, le flux thermique est concentré sur le sol en dessous des chambres de combustion indépendantes et n'affecte pas la végétation qui n'est pas balayée au regard de l'ouverture de la chambre, ni la végétation située au-dessus de la chambre de combustion. Selon ce mode particulier de réalisation, préférentiellement, ladite rampe de moyens formant buse est fixée parallèlement à ladite portion du pourtour desdites chambres mobiles correspondant audit bord latéral.

Avantageusement, les chambres de combustion indépendantes comportent en outre au moins un moyen unique formant buse de manière à fournir une puissance thermique supplémentaire afin d'assurer la destruction complète des plantes indésirables.

De manière préférentielle, le bord latéral desdits moyens formant chambre contre lequel un obstacle est susceptible de s'appliquer présente une forme sensiblement symétrique par rapport à un axe perpendiculaire à la direction d'avancement dudit véhicule. Ainsi, lorsqu'une première partie du bord latéral est appliquée contre l'obstacle, les moyens formant chambre mobile se rétractent progressivement selon la courbure de cette première partie puis reprennent leur position initiale progressivement selon la courbure d'une deuxième partie. La symétrie de ces deux parties, l'une par rapport à l'autre selon un axe perpendiculaire à la direction d'avancement du véhicule, permet de fournir un temps d'exposition de la surface au sol au regard de la chambre sensiblement identique devant l'obstacle et derrière l'obstacle.

Préférentiellement, la partie mobile est munie de moyens de rappel pour la déplacer afin qu'elle reprenne sa position initiale par rapport audit châssis dès que ledit obstacle a cessé d'exercer une force sur son bord latéral. En effet, pour que les moyens formant chambre de combustion mobile reprennent leur position initiale, ils comportent des moyens généralement élastiques reliés au châssis que l'on décrira plus en détail ci-après.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue de dessus en élévation montrant un dispositif en détail selon un premier mode particulier de mise en oeuvre dans lequel les moyens formant chambre de combustion comportent une chambre de combustion unique,
- la Figure 2, est une vue de dessus en élévation du dispositif illustré sur la Figure 1 en fonctionnement,
- la Figure 3 est une vue arrière verticale du dispositif selon le mode de mise en oeuvre de la Figure 1 en fonctionnement,
- la Figure 4 est une vue de dessus en élévation du dispositif selon un deuxième mode particulier de mise en oeuvre dans lequel les moyens formant chambre de combustion comportent deux chambres de combustion indépendantes, et,
- la Figure 5 est une vue arrière verticale du dispositif selon le mode de mise en oeuvre de la Figure 4.

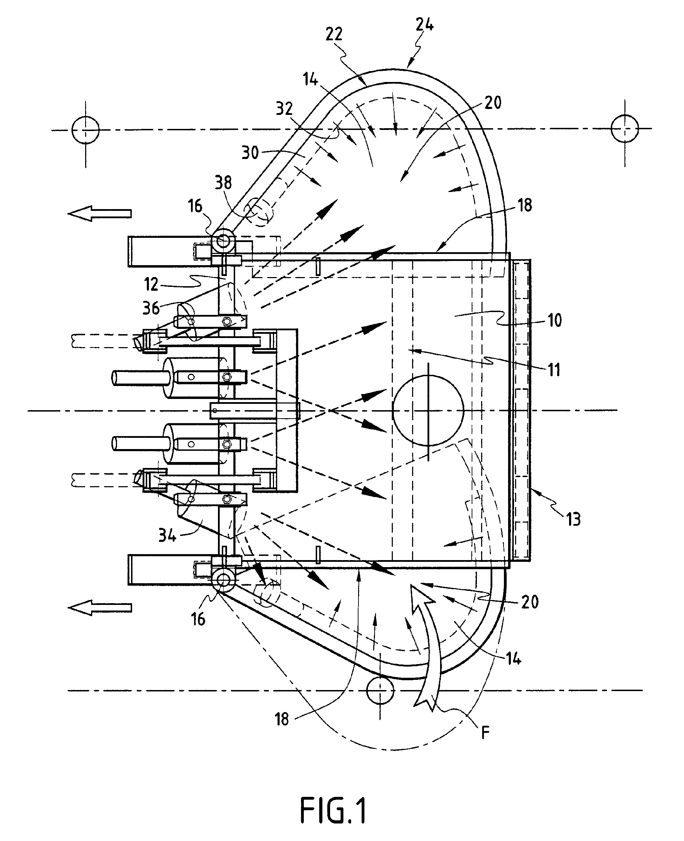

En se référant tout d'abord à la Figure 1, on décrira un premier mode de réalisation du désherbeur dans le cas où les moyens formant chambre de combustion présentent une chambre de combustion unique.

Le désherbeur thermique comporte une première portion de chambre 10 ayant la forme générale d'un caisson, ouvert au regard du sol et présentant une paroi supérieure 11 fixée au châssis 12. De plus, la paroi supérieure 11 présente une partie inférieure formant jupe 13. De chaque côté de la première portion de chambre 10, des portions de chambre mobiles 14 sont montées pivotantes autour d'un axe vertical 16 de telle sorte qu'elles sont susceptibles de pivoter dans un plan horizontal selon la flèche F. Les parois latérale 18 de la première portion de chambre 10 comportent des ouvertures que les portions de chambre mobiles 14 sont aptes à traverser pour s'encastrer dans la première portion de chambre 10. Par ailleurs, les portions de chambre mobiles 14 comportent également une paroi supérieure 20 et des parties inférieures formant jupe 22 dans leur bord latéral 24. Ainsi, la première portion de chambre 10 et les deux portions de chambre mobiles 14 constituent une seule chambre de combustion unique. En outre, les deux chambres mobiles 14 sont munies de dispositif formant ressort, afin de maintenir lesdites chambres dans une position non rentrée dans ladite première portion de chambre 10. Le dispositif est constitué d'un ressort monté sur les axes de pivotement 16 ou d'un ressort reliant une partie mobile de la chambre mobile 14 à la première portion de chambre 10.

Le désherbeur comporte des moyens formant brûleur de deux types différents : des brûleurs 30 constitués d'une rampe de moyens 32 formant buse et des brûleurs 34 comportant un moyen unique 36 formant buse. La rampe est constituée d'un tube dans lequel on ménage des orifices définissant les moyens 32 formant buse ; elle est appliquée contre l'intérieur de la paroi supérieure 20 de la portion de chambre mobile 14 et épouse la forme de la partie intérieure de la jupe 22. La longueur de la rampe correspond à la longueur du pourtour de la portion de chambre mobile 14 située en dehors de la première portion 10 et elle est fixée dans la paroi supérieure 20. Le mélange air/gaz est assuré à l'extrémité 38 de la rampe afin d'être propulsé selon l'axe des moyens formant buse 32 dirigé vers la surface au sol correspondant à la projection orthogonale de ladite portion de chambre mobile 14 sur le sol. Ainsi, le flux thermique généré par la propulsion du gaz et par sa combustion est concentré sur la surface au sol en regard de la portion de chambre mobile 14 et une faible quantité d'énergie thermique est directement cédée à l'extérieur de la chambre de combustion.

En outre, la rampe comporte des moyens formant veilleuse produisant une flamme apte à enflammer le mélange air/gaz projeté par les moyens formant buse. Ce dispositif permet de stabiliser les flammes.

Par ailleurs, les brûleurs 34 comportant un moyen unique 36 formant buse permettent de produire de l'énergie thermique en regard de la première portion de chambre 10. Les axes des moyens uniques 36 formant buse sont dirigés vers la surface au sol correspondant à la projection orthogonale de la première portion de chambre 10 sur le sol et la composante horizontale de ces axes est dirigée vers les brûleurs 30 constitués d'une rampe et vers la partie inférieure de la première portion de chambre 10 formant jupe 13. Ainsi, le flux thermique dirigé vers les portions de chambre mobiles est substantiellement freiné par le flux thermique produit par les rampes de moyens 32 formant buse, lequel constitue un obstacle.

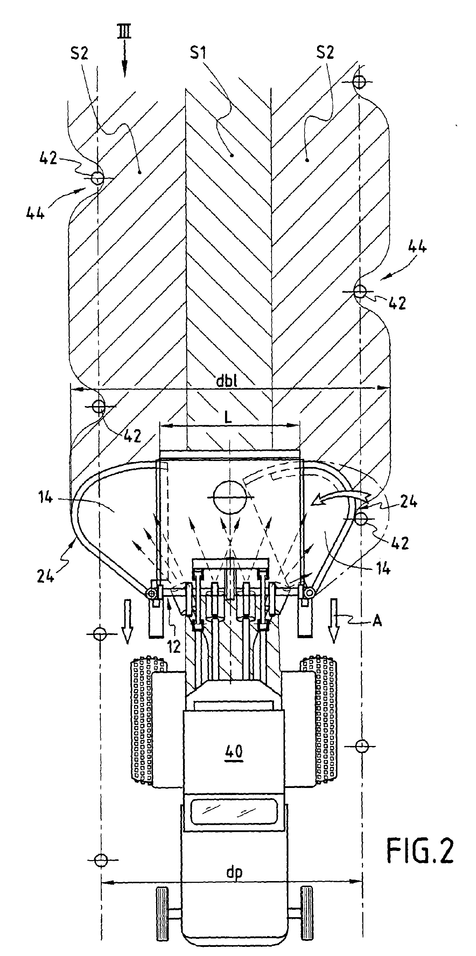

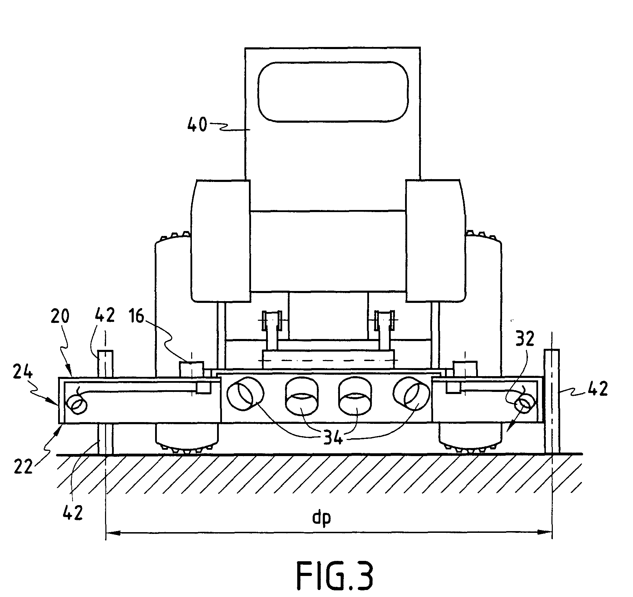

On se référera maintenant à la Figure 2 et à la Figure 3 pour décrire le fonctionnement du désherbeur thermique selon le premier mode de réalisation décrit ci-dessus.

Le châssis 12 est attelé sur un véhicule motorisé 40 qui permet de supporter le désherbeur thermique. Le véhicule motorisé 40 se déplace selon la flèche A parallèlement et entre les rangs des plantations qui présentent des pieds 42. La surface au sol S1 balayée au regard du véhicule motorisé 40 est située entre les rangs de plantations et présente une forme constante.

La première portion de chambre 10 présente une largeur sensiblement identique à la largeur du véhicule motorisé 40 qui est inférieure à la distance séparant deux rangs de plantation dp, tandis que la distance qui sépare les deux bords latéraux dbl des deux portions de chambre mobiles 14 est en position normale supérieure à la distance qui sépare deux rangs de plantations. Ainsi, la largeur de la surface au sol susceptible d'être exposée au regard de la chambre de combustion est supérieure à la largeur dp séparant deux rangs de plantations.

Bien entendu, on ne sortirait pas du cadre de l'invention si la largeur de la première portion de chambre 10 était supérieure ou inférieure à la largeur du véhicule motorisé 40.

Durant l'avancement du véhicule 40, les portions de chambre mobiles 14 se rétractent sous l'effet d'une force exercée par les pieds 42 puis retrouvent leur position normale après que l'obstacle est franchi sous l'effet des moyens formant ressort. La portion de bord latéral 24 qui heurte les pieds 42 présente un angle obtus avec la direction d'avancement du véhicule 40 et se prolonge par une portion arrondie de manière à ne pas endommager le pied.

On comprend que le temps d'exposition de la surface au sol sous la portion mobile 14 de la chambre à proximité du pied 42 est fonction de la géométrie de cette portion mobile 14. Ainsi, pour que le temps d'exposition soit identique avant et après le pied 42 il est nécessaire que la portion de bord latéral 24 susceptible d'être en contact avec le pied 42 soit sensiblement symétrique par rapport à un axe orthogonal à la direction d'avancement du véhicule 40.

On comprend également que la surface au sol S2 exposée à la chambre de combustion varie transversalement par rapport à la surface au sol S1 balayée au regard du véhicule 40 et présente des étranglements 44 à la hauteur des pieds 42 correspondant à la rétraction des portions mobiles 14 de chambre. La surface que présentent ces étranglements 44 est exposée à la portion mobile 14 de chambre de combustion lors du passage du véhicule 40 dans le rang suivant conduisant à une couverture totale de la surface au sol.

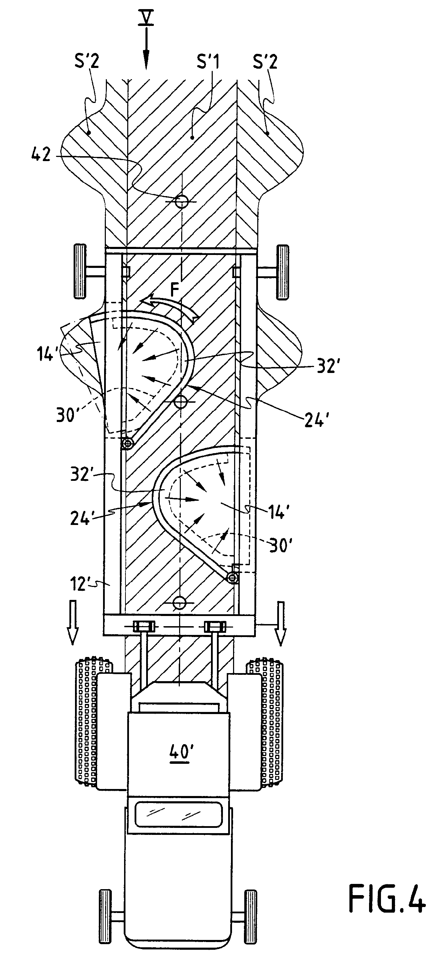

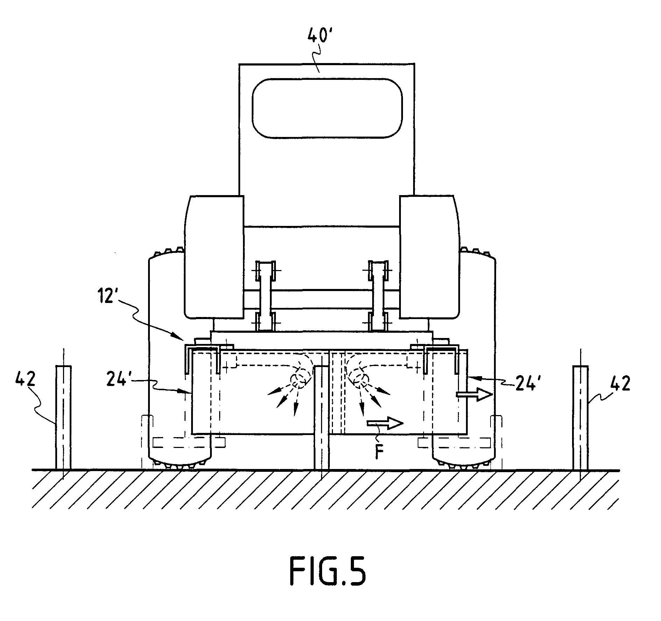

On se référera aux Figures 4 et 5 pour décrire l'invention selon un deuxième mode de réalisation dans lequel la surface au sol située entre deux rangs n'est pas exposée au désherbeur thermique. Cette situation peut se rencontrer dans le cas où l'on souhaite désherber cette surface avec des moyens mécaniques ou bien ne pas la désherber.

Dans ce mode particulier de réalisation les moyens formant chambre de combustion comportent uniquement deux chambres de combustion indépendantes 14', montées mobiles sur un châssis 12'. Ce châssis est attelable sur un véhicule motorisé enjambeur apte à se déplacer au-dessus des rangs dans une direction parallèle à ces derniers. Le désherbeur thermique comporte deux chambres indépendantes 14' chacune située de chaque côté du rang et montée articulée sur le châssis 12', les deux chambres étant décalées l'une par rapport à l'autre de manière à ce que les surfaces au sol exposées au regard des chambres de combustion 14' se chevauchent dans une partie centrale située dans l'axe du rang.

De façon analogue au mode de réalisation précédent, les chambres de combustion indépendantes 14' s'écartent de l'axe du rang lorsqu'elles heurtent un pied 42' et contournent partiellement ce dernier durant l'avancement du véhicule. En revanche, la surface au sol S2' exposée au regard des chambres de combustion 14' présente des étranglements entre les pieds 42' et non au niveau des pieds 42' comme dans le mode de réalisation précédent.

Les chambres de combustion indépendantes 14' comportent également des rampes de moyens 32' formant buse épousant la forme du bord latéral 24' et dont les axes des moyens 32' formant buse coupent la surface au sol correspondant à la projection orthogonale de la chambre indépendante 14'.

Lorsque l'énergie thermique nécessaire au désherbage n'est pas suffisante, on prévoit également de fixer un brûleur unique sur les chambres de combustion indépendantes 14'.

Par ailleurs, on prévoit la possibilité de monter plus de deux chambres de combustion indépendantes sur le même châssis afin que la surface au sol comportant les végétaux indésirables soit exposée au moins deux fois successives pour les détruire de façon certaine.

Selon un troisième mode de réalisation on prévoit un système analogue à celui qui est décrit ci-dessus, selon lequel le châssis 12' est tracté depuis l'espace disponible entre deux rangs par un véhicule motorisé classique et non par un tracteur enjambeur.

Par ailleurs, selon un quatrième mode de réalisation, le désherbeur présente des caractéristiques analogues à celles du premier mode de réalisation décrit ci-dessus selon lequel la première portion de chambre fixe n'est pas prévue. Ainsi, tout comme dans le deuxième mode de réalisation, on prévoit des chambres de combustion indépendantes mobiles par rapport au châssis, mais dont l'activité de désherbage est effectuée simultanément sous deux rangs contiguës uniquement.

## Revendications

1. Désherbeur thermique attelable sur un véhicule, notamment un véhicule motorisé, comportant des moyens formant châssis solidaires dudit véhicule, caractérisé en ce qu'il comprend :
- des moyens (10, 14, 14') formant au moins une chambre de combustion présentant une ouverture en regard du sol, solidaires dudit châssis (12, 12') et dont au moins une partie (14, 14') est mobile transversalement par rapport à la direction d'avancement dudit véhicule (40, 40') de façon que les contours de la surface au sol (S2, S2') balayée longitudinalement en regard de ladite ouverture desdits moyens varient transversalement, par rapport aux contours de la surface au sol (S1, S1') balayée au regard dudit véhicule (40, 40'), sous l'action d'une force F exercée par un obstacle (42) sur le bord latéral (24, 24') desdits moyens, et,
- une pluralité de moyens formant brûleur (30, 34, 30'), solidaires des moyens (10, 14, 14') formant chambre de combustion, comportant des moyens (32, 36, 32') formant buse dont les axes sont dirigés selon des directions qui coupent la surface au sol correspondant à la projection orthogonale de ladite ouverture par quoi l'énergie thermique produite par lesdits moyens (30, 34, 30') formant brûleur est substantiellement cédée à la surface du sol en regard de ladite ouverture.

2. Désherbeur thermique selon la revendication 1, caractérisé en ce que lesdits moyens (10, 14, 14') formant chambre de combustion sont constitués d'une première portion (10) fixée audit châssis et d'au moins une portion latérale (14) mobile par rapport à ladite première portion (10) de façon à constituer une chambre de combustion unique.

3. Désherbeur thermique selon la revendication 2, caractérisé en ce que les moyens formant chambre de combustion sont constitués d'une partie supérieure formant paroi (20) et d'une partie inférieure formant jupe (22), et en ce que ladite partie supérieure comporte une première portion fixée audit châssis (12) et au moins deux portions latérales (14) mobiles par rapport à ladite première portion (10).

4. Désherbeur thermique selon la revendication 1, caractérisé en ce que les moyens formant chambre de combustion comportent une pluralité de chambres de combustion indépendantes (14'), montées mobiles sur ledit châssis (12').

5. Désherbeur thermique selon la revendication 4, caractérisé en ce que les chambres de combustion indépendantes (14') sont constitués d'une partie supérieure formant paroi et d'une partie inférieure formant jupe, et en ce que ladite partie supérieure est montée mobile sur ledit châssis (12').

6. Désherbeur thermique selon l'une quelconque des revendications 1 à 5, caractérisé en ce que les moyens formant brûleur sont constitués d'une rampe de moyens (32, 32') formant buse.

7. Désherbeur thermique selon l'une quelconque des revendications 1 à 5, caractérisé en ce que les moyens formant brûleur sont constitués d'un moyen unique (36) formant buse.

8. Désherbeur thermique selon les revendications 2 et 6, caractérisé en ce que lesdites portions latérales (14) de chambre mobiles comportent une rampe de moyens (32) formant buse solidaire d'une portion du pourtour desdites chambres mobiles.

9. Désherbeur thermique selon la revendication 8, caractérisé en ce que ladite rampe de moyens (32) formant buse est fixée parallèlement à ladite portion du pourtour desdites chambres mobiles correspondant audit bord latéral (24).

10. Désherbeur thermique selon l'une quelconque des revendications 7 à 9, caractérisé en ce que ladite première portion (10) de chambre comporte une pluralité de moyens uniques (36) formant buse dont la composante horizontale de leurs axes est susceptible d'être dirigée vers ladite rampe de moyens (32) formant buse de la portion mobile de chambre (14).

11. Désherbeur thermique selon l'une quelconque des revendications 7 à 9, caractérisé en ce que ladite première portion (10) de chambre comporte des moyens formant brûleur constitués d'au moins une rampe de moyens (32, 32') formant buse.

12. Désherbeur thermique selon les revendications 6 et 10 caractérisé en ce que ladite première portion (10) de chambre comporte en outre une rampe de moyens (32) formant buse

13. Désherbeur thermique selon les revendications 4 et 6, caractérisé en ce que lesdites chambres de combustion indépendantes (14') comportent une rampe de moyens (32') formant buse solidaire d'une portion du pourtour desdites chambres de combustion indépendantes (14').

14. Désherbeur thermique selon la revendication 13, caractérisé en ce que ladite rampe de moyens (32) formant buse est fixée parallèlement à ladite portion du pourtour desdites chambres mobiles correspondant audit bord latéral (24).

15. Désherbeur thermique selon les revendications 7 et 13, caractérisé en ce que lesdites chambres de combustion indépendantes (14') comportent en outre au moins un moyen unique formant buse.

16. Désherbeur thermique selon l'une quelconque des revendications 1 à 15, caractérisé en ce que ledit bord latéral (24, 24') desdits moyens formant chambre (14, 14') contre lequel un obstacle est susceptible de s'appliquer présente une forme symétrique par rapport à un axe perpendiculaire à la direction d'avancement dudit véhicule (40, 40').

17. Désherbeur thermique selon l'une quelconque des revendications 1 à 16, caractérisé en ce que ladite partie mobile (14, 14') est munie de moyens de rappel pour la déplacer afin qu'elle reprenne sa position initiale par rapport audit châssis (12, 12') dès que ledit obstacle a cessé d'exercer une force sur son bord latéral (24, 24').
